# EUROPÄISCHE PATENTSCHRIFT

(11) **EP 1 929 604 B1**
(45) Veröffentlichungstag und Bekanntmachung des Hinweises auf die Patenterteilung: **29.06.2011**
(21) Anmeldenummer: 06793220.2
(22) Anmeldetag: 05.09.2006
(51) Int. Cl.: H02H 7/08, H02P 3/12, H02P 3/22

(54) **ANSTEUERSYSTEM UND VERFAHREN ZUR ANSTEUERUNG FÜR EINEN PERMANENT ERREGTEN ELEKTROMOTOR**
CONTROL SYSTEM AND METHOD FOR CONTROLLING A PERMANENTLY EXCITED ELECTRIC MOTOR
SYSTEME DE COMMANDE ET PROCEDE DE COMMANDE POUR UN MOTEUR ELECTRIQUE A EXCITATION PERMANENTE

(30) Priorität: 30.09.2005 DE 102005046961
(43) Veröffentlichungstag der Anmeldung: 11.06.2008
(73) Patentinhaber: SIEMENS AKTIENGESELLSCHAFT, 80333 München (DE)
(72) Erfinder: KRIEGEL, Kai, 81545 München (DE)
(86) Internationale Anmeldenummer: PCT/EP2006/066007
(87) Internationale Veröffentlichungsnummer: WO 2007/039377

(56) Entgegenhaltungen:
- DE-A1- 4 425 547
- DE-A1- 19 611 401
- DE-A1- 19 835 576
- DE-U1- 29 813 080

## Beschreibung

Die Erfindung betrifft ein Ansteuersystem und ein Verfahren zur Ansteuerung für einen permanent erregten Elektromotor.

Permanenterregte Elektromotoren werden beispielsweise als Fahrzeugantriebsmotoren verwendet, die bei Hybridantriebssystemen elektrische Energie aus einem durch eine Brennkraftmaschine angetriebenen Generator oder bei vollelektrisch betriebenen Fahrzeugen elektrische Energie aus einer so genannten Traktionsbatterie erhalten. Bei permanent erregten Elektromotoren besteht aufgrund ihres Aufbaus grundsätzlich das Problem, dass aufgrund der im Betrieb auftretenden Relativbewegung zwischen den Ankerwicklungen und den Permanentmagneten in den Ankerwicklungen eine als Polradspannung bekannte Gegenspannung induziert wird. Diese induzierte Spannung steigt mit zunehmender Drehzahl an, bis sie schließlich im Bereich der durch die Spannungsquelle für den Elektromotor bereitgestellten Versorgungsspannung liegt. Eine weitere Erhöhung der Motordrehzahl kann dann nur durch eine so genannte Feldschwächung erreicht werden, bei welcher eine Strangverschiebung des in die Wicklungen eingeleiteten Stroms erzeugt wird. Treten bei derartigen Antriebssystemen mit permanent erregten Elektromotoren Fehler auf, zum Beispiel der Ausfall der die Feldschwächung vornehmenden Ansteuereinheit, so kann dies zu ernsthaften Problemen führen.

So führt der Ausfall der Feldschwächung insbesondere bei hohen Drehzahlen zu einem erheblichen Bremsmoment, das bei der Rückspeisung elektrischer Energie vom Motor in die Spannungsquelle, z.B. Traktionsbatterie, erzeugt wird. Aufgrund der Spannungsüberhöhung, verursacht durch den Innenwiderstand der Batterie, besteht weiterhin die Gefahr, dass es zur Schädigung der Traktionsbatterie kommt, die im allgemeinen für eine Betriebsspannung von ca. 200V bis 300V ausgelegt ist. Ferner ist das Auftreten derartig großer Bremsmomente im Fahrbetrieb unerwünscht, da dies zu einer Gefährdung der in einem Fahrzeug sitzenden Personen führen kann.

Ist mit dem Zwischenkreis keine Spannungsquelle verbunden, oder ist beispielsweise die Verbindung der Spannungsquelle mit dem Zwischenkreis unterbrochen worden, so kann die Polradspannung am Zwischenkreis anliegen und insbesondere die dort vorhandenen Bauelemente schädigen oder zerstören.

Um diese Probleme zu vermeiden, ist es möglich, die verschiedenen Komponenten des Umrichters, beispielsweise die Kondensatoren und Leistungshalbleiter, derart zu dimensionieren, dass die gleichgerichtete Polradspannung die Nennspannung der Komponenten nicht übersteigt. Durch eine derartige Überdimensionierung der Komponenten kann das Risiko einer Beschädigung reduziert werden. Dabei ist es von Nachteil, dass die Antriebssysteme nicht für das zur Verfügung stehende Volumen bzw. für die Erzeugung größtmöglicher Leistung ausgelegt werden können. Auch die verschiedenen Bauteile des Zwischenkreises oder der Leistungselektronik müssen bei diesem Ansatz für die zu erwartenden maximalen Spannungen ausgelegt werden, was regelmäßig zu hohen Bauteilkosten führt.

DE 198 35 576 A1 schlägt ein Ansteuersystem vor mit einer Ansteueranordnung, die derart eingerichtet ist, dass dann, wenn durch eine Betriebszustands-Erfassungsanordnung in dem Ansteuersystem oder/und dem Elektromotor das Vorliegen wenigstens eines vorbestimmten Betriebszustands erfasst wird, ein Kurzschlusses bei jedem Strang des Motors erzeugt wird.

Das in DE 198 35 576 A1 beschriebene Ansteuersystem ist in der Lage, unterschiedliche Betriebszustände zu berücksichtigen und dabei durch gezieltes Erzeugen eines Kurzschlusses im Elektromotor das Auftreten potentieller Gefahren oder potentiell ungewünschter Folgezustände zu vermeiden. Gerade im Bereich hoher Drehzahlen ist das bei Kurzschluss erzeugte Bremsmoment vernachlässigbar, insbesondere liegt das Bremsmoment deutlich unterhalb des Bremsmoments eines nicht kurzgeschlossenen Elektromotors. Tritt beispielsweise ein spontaner Ausfall der Feldschwächung auf, so kann durch gezieltes Kurzschließen des Elektromotors zum einen das Auftreten eines unerwünschten Bremsmoments deutlich reduziert werden, zum anderen kann verhindert werden, dass eine möglicherweise vom Elektromotor in den Zwischenkreis eingespeiste Spannung zur Beschädigung der Bauteile, der Komponenten oder der Spannungsquelle (z.B. der Traktionsbatterie) führt.

Fig.1 zeigt ein Ansteuersystem gemäß DE 198 35 576 A1. Das Ansteuersystem kann grundsätzlich in folgende Baugruppen untergliedert werden:
- Eine Umrichtereinheit 12 mit drei Halbbrücken 14, 16, 18, wobei jede der Halbbrücken 14, 16, 18 einer der drei Motorphasen 20, 22, 24 des Elektromotors 26 zugeordnet ist;
- einen Zwischenkreis 28 mit einem Zwischenkreiskondensator 30, wobei der Zwischenkreis 28 die Umrichtereinheit 12 mit einer Spannungsquelle 32 verbindet.

In der Darstellung ist die Spannungsquelle 32 eine Traktionsbatterie, ggf. mit Leistungselektronik, welche eine Gleichspännung liefert. Es sei jedoch darauf verwiesen, dass beispielsweise auch in Hybridantrieben als Spannungsquelle für den Elektromotor 26 ein durch einen Verbrennungsmotor angetriebener Generator mit nachgeschalteter Leistungselektronik eingesetzt werden kann.

Die Motorsteuerung 34 steuert über jeweilige Signalleitungen die Umrichtereinheit 12, d.h. die jeweiligen Halbbrücken 14, 16, 18 der Umrichtereinheit, an. Jede Halbbrücke 14, 16, 18 enthält hierbei ein erstes Schalterelement 36, aus einem IGBT (Insulated Gate Bipolar Transistor) mit einer parallel geschalteten Freilaufdiode, sowie ein zweites Schalterelement 38 aus einem IGBT mit einer parallel geschalteten Freilaufdiode. Die einzelnen IGBTs der verschiedenen Halbbrücken 14, 16, 18 werden durch die Motorsteuerung 34 angesteuert, um die einzelnen Stränge 20, 22, 24 des Elektromotors 26 wahlweise und für vorbestimmte Zeitdauern mit den verschiedenen Potentialen des Zwischenkreises 28 zu verbinden.

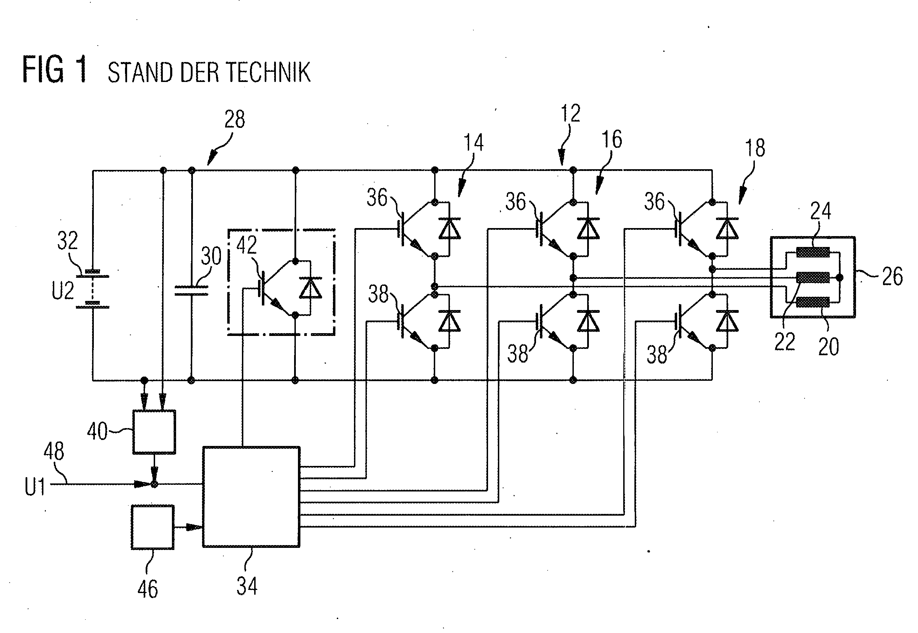

Weiterhin weist das Ansteuersystem gemäß Fig.1 einen Gleichspannungs-/Gleichspannungs-Umsetzer 40 auf, der die am Zwischenkreis 28 anliegende Spannung abgreift und diese in eine gewünschte Gleichspannung, beispielsweise in Höhe von 12V, umsetzt. Diese Gleichspannung wird parallel zu der durch die Spannungsquelle 48 erzeugten Spannung an die Motorsteuerung 34 geleitet. Es handelt sich somit um eine redundante Spannungsversorgung für die Motorsteuerung 34, so dass beispielsweise bei Ausfall der Spannüngsquelle 48 die für die Motorsteuerung erforderliche Betriebsspannung dem Zwischenkreis entnommen werden kann und damit auch weiterhin die Ansteuerung bzw. Regelung des Elektromotors gewährleistet werden kann. Eine solche redundante Versorgung ist auch dann zweckdienlich, wenn zusätzlich zu der Spannungsquelle 48 die Spannungsquelle 32 ausfällt, da in diesem Falle durch die im Elektromotor 26 induzierte Spannung und die Gleichrichtung über die Freilaufdioden am Zwischenkreis eine Spannung erzeugt wird, die als Betriebsspannung für die Motorsteuerung eingesetzt werden kann, um auch bei vollständigem Ausfall der Spannungsversorgung die Regelung des Motors 26 zu gewährleisten, insbesondere dann, wenn der Motor 26 im Feldschwächebereich betrieben wird.

Tritt im Bereich des Ansteuersystems, beispielsweise im Bereich des Elektromotors 26 selbst oder im Bereich der Spannungsquelle, ein Fehler auf, so kann durch die Motorsteuerung 34 ein Kurzschluss dadurch erzeugt werden, dass entweder alle Schalterelemente 36 oder alle Schalterelemente 38 oder alle Schalterelemente 36 und 38 leitend geschaltet werden. Damit wird vermieden, dass die im Motor erzeugte Polradspannung am Zwischenkreis anliegt und die dort enthaltenen Komponenten oder die Komponenten der Halbbrücken 14, 16, 18 oder die Spannungsquelle 32 beschädigt. Bei modernen permanent erregten Elektromotoren kann die Polradspannung deutlich über der durch die Spannungsquelle 32 bereitgestellten Versorgungsspannung liegen. Bei Übersteigen der für die Spannungsquelle 32 zulässigen Spannung besteht die Gefahr, dass bei Rückspeisung der elektrischen Energie durch die gleichgerichtete Polradspannung die Spannungsquelle 32 beschädigt wird. Entsprechendes gilt für die Schalter 36 bzw. 38: Auch hier kann durch den beschriebenen geschalteten Kurzschluss eine Beschädigung der Schalter vermieden werden.

Da kein unerwünschter Spannungsanstieg im Zwischenkreis 28 bzw. in der Umrichtereinheit 12 auftreten kann, ist es von Vorteil, dass die verschiedenen Schalelemente oder Baugruppen nicht für den Fehlerfall und die damit verbundenen hohen maximalen Spannungen ausgelegt werden müssen. So können insbesondere im Bereich der Halbleiterbauteile Kosten eingespart werden.

Andererseits ist es möglich, die verschiedenen Komponenten, insbesondere den Elektromotor, derart auszugestalten, dass bei vorgegebenem Volumen die größtmögliche Leistung erzielt werden kann, ohne dabei auf Seiten der Schaltung darauf achten zu müssen, dass ein übermäßig großer Sicherheitsabstand der jeweiligen Nennspannungen verschiedener Komponenten zu den maximal (im Fehlerfall) zu erwartenden Spannungen vorhanden ist.

Der angesprochene Fehlerzustand kann in verschiedenen Bereichen des Antriebssystems auftreten. So kann beispielsweise ein Lagegeber für den Rotor des Motors defekt sein, so dass eine korrekte Stromversorgung des Motors nicht mehr möglich ist. Weiterhin kann bzw. können der Stromsensor bzw. die Stromsensoren zur Erfassung der in den einzelnen Motorsträngen 20, 22, 24 fließenden Ströme defekt sein. Auch könnte im Elektromotor selbst ein Kurschluss vorliegen. Ferner kann, wie vorangehend angesprochen, ein Ausfall oder ein Abfall der durch die Spannungsquelle 32 bereitgestellten Spannung vorliegen.

In Fig.1 ist ein weiteres Schalterelement 42 erkennbar, das zu den Schaltern 36 bzw. 38 der Halbbrückeneinheit 12 parallel geschaltet ist. Auch dieses Schalterelement 42 kann wieder einen IGBT und einen Reihenwiderstand aufweisen und wird von der Motorsteuerung 34 angesteuert. Der vorstehend beschriebene geschaltete Kurzschluss kann alternativ durch das Leitendschalten des Schalterelements 42 erreicht werden. Ein solcher Kurzschluss sollte nur dann, ebenso wie ein gleichzeitiges Leitendschalten aller Schalterelemente 36 und 38, durch die Motorsteuerung 34 verursacht werden, wenn ein vollständiger oder nahezu vollständiger Spannungsabfall oder Ausfall der Spannungsquelle 32 vorliegt. Ansonsten würde gleichzeitig mit dem Leitendschalten der Schalterelemente 36 und 38 die Spannungsquelle 32 kurzgeschlossen. Um dies zu verhindern könnte zusätzlich im Zwischenkreis 28 zwischen dem Schalterelement 42 und der Spannungsquelle 32 ein weiteres Schalterelement vorgesehen sein, das mit dem Durchschalten des Schalterelements 42 sperrt, so dass der Kurzschluss lediglich in der Darstellung der Fig.1 an der rechten Seite des Schalterelements 42, d.h. im Bereich des Motors 26, erzeugt wird.

Aus der DE 298 13 080 U1 ist ebenfalls ein Ansteuersystem bekannt, bei dem zum Überspannungsschutz ein Kurzschluss in den Strängen des Motors erzeugt wird.

Aus der DE 44 25 547 A1 ist ein frequenzgeregelter Wechselrichter zur Ansteuerung eines Motors bekannt, bei dem im normalen Betrieb eine Begrenzung von Überspannungen mittels eines Bremschoppers erfolgt.

Hierbei ist es von Nachteil, dass der Kurzschlussstrom nicht begrenzt wird. Dies ist insbesondere im Hinblick auf den Einschaltspitzenstrom problematisch. Durch einen hohen Kurzschlussstrom kann der Motor, z.B. durch Entmagnetisierung des Permanentmagneten, dauerhaft geschädigt werden.

Die Aufgabe der Erfindung besteht darin, die vorstehend genannten Nachteile zu vermeiden.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Ansteuersystem für einen permanent erregten Elektromotor mit mindestens einem Strang angegeben, das eine erste Halbbrückenanordnung für jeden Strang des Elektromotors umfasst. Das Ansteuersystem weist einen Zwischenkreis auf, der die Halbbrückenanordnung mit einer Motorversorgungsspannungsquelle verbindet. Der Zwischenkreis umfasst ferner einen sog. Bremschopper. Auch umfasst das Ansteuersystem eine Motorsteuerung zur Ansteuerung der Halbbrückenanordnung, wobei anhand der Motorsteuerung an den jeweiligen der Halbbrückenanordnung zugeordneten Strang des Elektromotors ein Potential vorgegebener Polarität für eine vorgegebene Zeitdauer anlegbar ist. Es ist ein Schutzmodul (VPM = "Virtual Protection Module") vorgesehen, das mit dem mindestens einen Strang des Elektromotors verbunden ist. Das Schutzmodul umfasst einen ersten Schalter anhand dessen der mindestens eine Strang des Elektromotors kurzschließbar ist.

Insbesondere kann im Fehlerfall der erste Schalter eingeschaltet und somit die Spannung am Zwischenkreis wirksam begrenzt werden.

Erfindungsgemäß ist bei Überschreitung eines vorgegebenen ersten Schwellwerts für den Phasenstrom der erste Schalter abschaltbar. Dabei kann der Phasenstrom der Strom des mindestens einen Strangs, insbesondere aber der kumulierte Phasenstrom mehrerer Stränge, sein. Um eine dauerhafte Schädigung des Motors, insbesondere der Permanentmagneten in dem Motor, zu verhindern, gilt es, den Kurzschlussstrom zu begrenzen. Dies geschieht insbesondere durch besagtes Abschalten des ersten Schalters. Als Folge dieses Abschaltens kann die Spannung am Zwischenkreis wieder steigen. Übersteigt die Spannung an dem Zwischenkreis einen vorgegebenen zweiten Schwellwert, so wird der Bremschopper aktiviert. Der Bremschopper umfasst vorzugsweise eine Reihenschaltung aus einem Schalter und einem Verbraucher, z.B. einem ohmschen Widerstand, und liegt bevorzugt parallel zu der Halbbrückenanordnung in dem Zwischenkreis. Der Schalter wird nun - also bei Erreichen bzw. Überschreiten des zweiten Schwellwertes - immer wieder geschlossen und geöffnet, die Spannung am Zwischenkreis wird "zerhackt" und somit begrenzt. Dabei dient insbesondere der Verbraucher, z.B. besagter ohmscher Widerstand, der Erzeugung eines Bremsmoments, d.h. die überschüssige Energie wird in Wärme verwandelt.

Eine Ausgestaltung besteht darin, dass eine Messeinheit vorgesehen ist, die aktuelle Messwerte erfasst und damit einen Vergleich mit den vorgegebenen ersten und zweiten Schwellwerten durchführbar macht. Der Vergleich mit den Schwellwerten kann bspw. in der Messeinheit oder aber in dem Schutzmodul erfolgen. Insbesondere kann anhand der Messeinheit ein sog. Fehlerfall detektierbar sein.

Eine Weiterbildung ist es, dass grundsätzlich anstelle des oder in Kombination mit dem Schwellwertvergleich eine Zeitsteuerung, z.B. des ersten Schalters, erfolgen kann. So ist es möglich, dass bei Erreichen und/oder Überschreiten des ersten Schwellwerts der erste Schalter öffnet. Ein solches Öffnen könnte auch eine vorgegebene Zeitdauer nach dem Schließen erfolgen. Weiterhin ist es möglich, dass nach diesem Öffnen wieder eine vorgegeben Zeitdauer abgewartet wird ehe der erste Schalter erneut geschlossen wird.

Auch ist es eine Ausgestaltung, dass der erste Schalter und/oder der zweite Schalter elektronische Schalter sind. Insbesondere können der erste Schalter und/oder der zweite Schalter mindestens eines der folgenden Bauelemente umfassen: einen Halbleiterschalter, einen Thyristor, einen IGBT und/oder einen Transistor.

Eine andere Weiterbildung besteht darin, dass der erste Schalter parallel zu einer zweiten Halbbrückenanordnung ausgeführt ist. Dabei kann die zweite Halbbrückenanordnung zumindest teilweise in dem Schutzmodul vorgesehen sein. Insbesondere können Bauelemente der ersten Halbbrückenanordnung zumindest teilweise auch Bauelemente der zweiten Halbbrückenanordnung sein.

Ein Fehlerfall kann insbesondere einen der folgenden Fälle umfassen:
- Ein Abfall oder ein Ausfall der Motorversorgungsspannung;
- Einen Kurzschlussfehler, insbesondere im Bereich des Motors;
- Ein Ansteigen einer Spannung an dem Zwischenkreis oberhalb eines vorgegebenen Grenzwerts;
- Fehler im Bereich der ersten oder zweiten Halbbrückenanordnung.

Zur Lösung der Aufgabe wird weiterhin ein Verfahren zur Ansteuerung des Ansteuersystems vorgestellt, umfassend die folgenden Schritte:
- Im Fehlerfall wird das Schutzmodul anhand des ersten Schalters zugeschaltet;
- Ein Phasenstrom in dem mindestens einen Strang wird gemessen;
- Überschreitet der Phasenstrom den vorgegebenen ersten Schwellwert, so wird der erste Schalter abgeschaltet;
- Erreicht die Spannung am Zwischenkreis einen zweiten Schwellwert, so wird diese Spannung mittels des Bremschoppers vermindert.

Insbesondere kann die Überwachung der Spannung an dem Zwischenkreis parallel bzw. unabhängig von der Aktivität in dem Schutzmodul erfolgen. Ferner kann der erste Schalter nach einer vorgegeben Zeitdauer und/oder bei erneutem Überschreiten des ersten Schwellwertes oder eines weiteren Schwellwertes für den Phasenstrom in dem mindestens einen Strang des Elektromotors wieder geschlossen werden.

Ausführungsbeispiele der Erfindung werden nachfolgend anhand der Zeichnungen dargestellt und erläutert. Es zeigen:
- Fig.1: eine schematische Schaltungsskizze eines Ansteuersys- tems in Verbindung mit einem dreiphasigen permanent erregten Elektromotor;
- Fig.2: eine Schaltungsskizze eines Ansteuersystems eines dreiphasigen Elektromotors, umfassend einen Brem- schopper und ein Schutzmodul;
- Fig.3: eine beispielhafte Realisierung des Schutzmoduls VPM;
- Fig.4: eine beispielhafte alternative Realisierung des Schutzmoduls VPM;
- Fig.5: eine Flussdiagramm für ein Verfahren zur Ansteuerung des Ansteuersystems;
- Fig.6: ein Signaldiagramm, das die Phasenströme bei Ansteue- rung über das Ansteuersystem zeigt;
- Fig.7: ein weiteres Signaldiagramm, das veranschaulicht, dass sowohl die Phasenströme als auch die Zwischen- kreisspannung auf vorgegebene Werte begrenzt werden können.

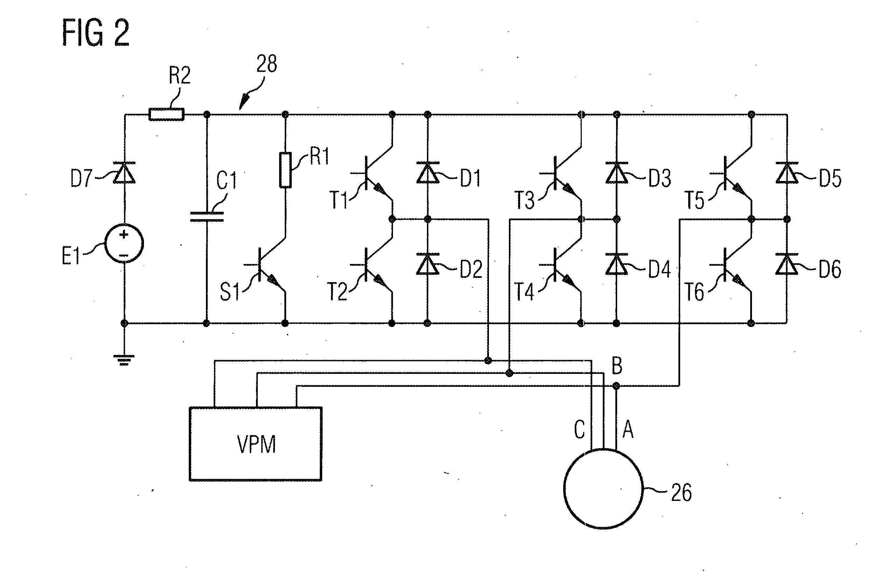

Fig.2 zeigt eine Schaltungsskizze eines Ansteuersystems eines Elektromotors 26. Es ist für jeden Strang A, B und C je eine Halbbrückenanordnung vorgesehen, d.h. für Strang A die Halbbrücke aus einem elektronischen Schalter T5 mit einer Freilaufdiode D5 und einem elektronischen Schalter T6 mit einer Freilaufdiode D6, für Strang B die Halbbrücke aus einem elektronischen Schalter T3 mit einer Freilaufdiode D3 und einem elektronischen Schalter T4 mit einer Freilaufdiode D4 und für einen Strang C die Halbbrücke aus einem elektronischen Schalter T1 mit einer Freilaufdiode D1 und einem elektronischen Schalter T2 mit einer Freilaufdiode D2. Der elektronischen Schalter und die zugehörige Freilaufdiode sind jeweils parallel zueinander geschaltet. Die elektronischen Schalter T1 bis T6 sind insbesondere Halbleiterschalter, z.B. Transistoren, Mosfets, Thyristoren, IGBTs oder ähnliches.

Ein Schutzmodul VPM ist mit den Strängen A, B und C verbunden.

In Fig.2 ist die Motorsteuerung (vergleiche Motorsteuerung 34 in Fig.1 mit zugehöriger Beschreibung) nicht gesondert dargestellt. Die Motorsteuerung steuert die Halbbrückenanordnungen an, wobei insbesondere ein Potential für eine vorgegebene Zeitdauer an die jeweilige Halbbrücke angelegt wird.

Ein Zwischenkreis 28 verbindet die Halbbrückenanordnungen mit einer Motorversorgungsspannungsquelle E1. Der Zwischenkreis 28 enthält einen Bremschopper umfassend eine Reihenschaltung aus einem elektronischen Schalter S1, der insbesondere als ein IGBT ausgeführt sein kann, und einem Verbraucher R1. Ferner umfasst der Zwischenkreis einen Kondensator C1, der parallel zu dem Bremschopper und parallel zu den Halbbrückenanordnungen geschaltet ist.

Ferner ist in Fig.2 eine Diode D7 anodenseitig mit dem positiven Pol der Motorversorgungsspannungsquelle E1 und kathodenseitig mit einem Widerstand R2 verbunden. Der negative Pol der Motorversorgungsspannungsquelle E1 und der verbleibende Anschluss des Widerstands R2 sind parallel zu dem Kondensator C1 bzw. dem Bremschopper und den Halbbrückenanordnungen geschaltet.

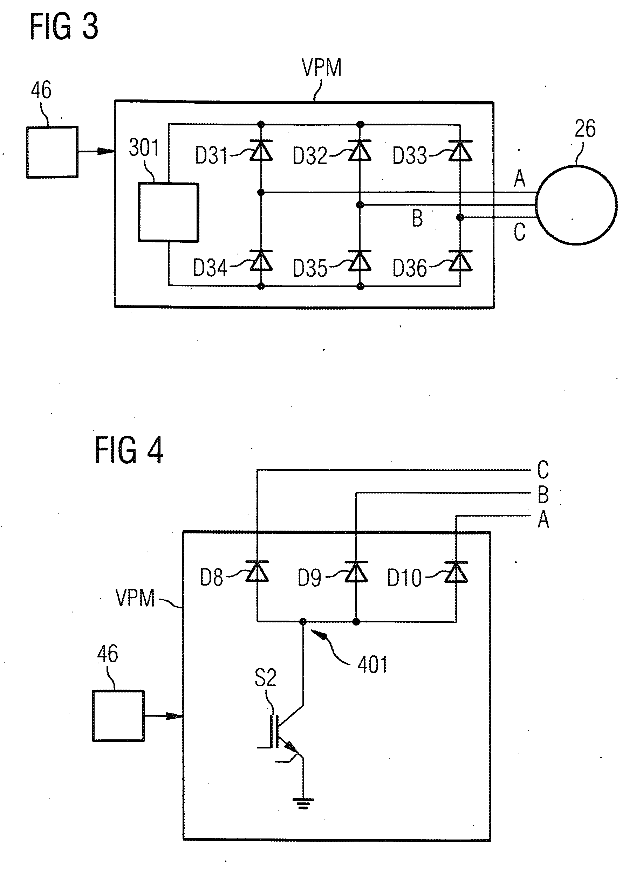

Das Schutzmodul VPM kann auf unterschiedliche Art ausgestaltet sein. Eine Möglichkeit ist in Fig.3 dargestellt. Ein erster Schalter, insbesondere ein elektronischer Schalter 301, z.B. ein IGBT, liegt parallel an drei weiteren Halbbrückenanordnungen, deren Mittelabgriff jeweils mit einem Strang des Elektromotors 26 verbunden ist.

Der Strang A ist mit der Halbbrückenanordnung aus einer Reihenschaltung der beiden Dioden D1 und D4 verbunden, wobei die Anode der Diode D1 mit der Kathode der Diode D4 und mit dem Strang A verbunden ist. Zwischen der Kathode der Diode D1 und der Anode der Diode D4 liegt der erste Schalter 301. Die Halbbrückenanordnungen für die Stränge B und C sind entsprechend mit den Dioden D2 und D5 (Strang B) und D3 und D6 (Strang C) verbunden.

Der elektronische Schalter 301 wird vorzugsweise (aber nicht zwingend) anhand der Messeinheit 46 angesteuert falls ein Fehler in der Schaltung vorliegt, d.h. falls z.B. der Umrichter ausfällt. In solch einem Fall wird der Schalter geschlossen und somit ein Kurzschluss herbeigeführt. Damit jedoch der Kurzschlussstrom nicht zu groß wird und womöglich den Permanentmagneten des Elektromotors 26 schädigt, wird der Schalter 301 bei Erreichen oder Überschreiten eines Kurzschlussstroms von vorgegebener Größe wieder geöffnet. Dies führt dazu, dass über die Freilaufdioden D1 bis D6 (siehe Fig.2) der Kondensator aufgeladen wird und damit die Spannung am Zwischenkreis 28 ansteigt. Erreicht der Zwischenkreis eine vorgegebene Spannung bzw. überschreitet die Spannung am Zwischenkreis einen vorgegebenen Schwellwert, so wird diese Spannung über den Bremschopper abgebaut.

Der elektronische Schalter S1 in Fig.1 wird dazu geschlossen, so dass ein Strom über den Widerstand R1 fließen kann. Dabei wird elektrische Energie in Wärme umgesetzt. Um die hohe Spannung am Zwischenkreis zu reduzieren, wird der Schalter S1 pulsierend mit einer vorgegebenen Intervalldauer geschlossen und wieder geöffnet, so dass in diesem "Zerhackmodus" iterativ die überschüssige elektrische Energie verbraucht wird.

Eine alternative Ausführungsform für das Schutzmodul VPM zeigt Fig.4. Hier ist der Strang A mit der Anode einer Diode D10, der Strang B mit der Anode einer Diode D9 und der Strang C mit der Anode einer Diode D8 verbunden. Die Kathoden der Dioden D8 bis D10 sind mit einem Knoten 401 verbunden, der über einen elektronischen Schalter S2, insbesondere einen IGBT, mit Masse verbunden ist. Die Messeinheit 46 liefert, ähnlich der Beschreibung zu Fig.3, Signale, die für die Artsteuerung des Schalters S2 dienen können.

In Verbindung mit der Schaltung gemäß Fig.2 stellen die Dioden D2 und D8, D4 und D9 und D6 und D10 wiederum jeweils eine Halbbrückenanordnung dar.

Insbesondere ein Erreichen bzw. Übersteigen der Phasenspannungen auf den Strängen A, B und/oder C führt zum Einschalten des Schalters S2. An dem Knoten 401 erfolgt die Messung des Phasenstroms. Bei Erreichen/Überschreiten des Schwellwerts für den Phasenstrom am Knoten 401 wird der Schalter S2 wieder geöffnet, das Schutzmodul VPM wird damit abgeschaltet. Die Strommessung kann in den einzelnen Phasen bzw. Strängen A, B und/oder C erfolgen. Es kann aber auch der im Knoten 401 zusammenlaufende Strom gemessen und ausgewertet werden.

Wie vorstehend beschrieben erfolgt insbesondere unabhängig davon eine Überwachung der Spannung am Zwischenkreis.

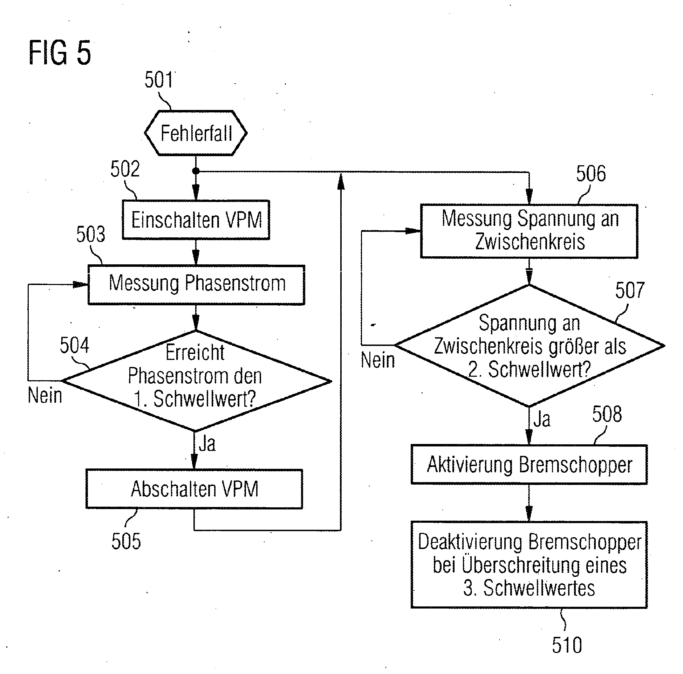

Die Funktionsweise der Ansteuerung wird nachfolgend anhand des Flussdiagramms von Fig.5 erläutert.

Ausgehend von einem Fehlerfall 501, z.B. dem Abfall oder dem Ausfall der Motorversorgungsspannung, dem Ausfall des Umrichters, dem Ausfall eines Bauteils im Umrichter, einem Kurzschluss im Motor oder in der Motorsteuerung, dem Ansteigen der Spannung am Zwischenkreis über einen vorgegebenen Schwellwert oder einer sonstigen Fehlfunktion, wird das Schutzmodul VPM in einem Schritt 502 eingeschaltet. Es erfolgt in einem Schritt 503 eine Messung des Phasenstroms, ggf. auch der Phasenspannung. Alternativ kann auch der Phasenstrom mehrerer Phasen (wie in Fig.4 dargestellt und erläutert) gemessen werden. In einem Schritt 504 wird geprüft, ob der Phasenstrom einen ersten Schwellwert erreicht hat bzw. diesen überschreitet. Falls der Phasenstrom unterhalb des ersten Schwellwerts liegt, wird zu Schritt 503 zurückverzweigt, d.h. die Messung des Phasenstroms wird fortgesetzt. Hierbei sei angemerkt, dass anstelle von Phasenstrom stets auch die Phasenspannung als Grundlage der Messung und des An-/Abschaltens des Schutzmoduls herangezogen werden kann. Ist der Phasenstrom größer (gleich) dem ersten Schwellwert, wird das Schutzmodul VPM abgeschaltet. Das An- bzw. Abschalten des Schutzmoduls VPM erfolgt über den in Fig.3 gezeigten Schalter 301 oder über den in Fig.4 gezeigten Schalter S2.

Wie erwähnt kann das Abschalten des Schutzmoduls VPM (im Schritt 505) im fortdauernden Fehlerfall jedoch dazu führen, dass (siehe Fig.2) der Kondensator C1 geladen wird bzw. die Spannung am Zwischenkreis steigt. Daher wird - insbesondere unabhängig von der Messung am Schutzmodul VPM - die Spannung an dem Zwischenkreis 28 in einem Schritt 506 gemessen. Überschreitet diese Spannung einen vorgegebenen zweiten Schwellwert (siehe Schritt 507), so wird der Bremschopper in einem Schritt 508 aktiviert. Im anderen Fall wird zu Schritt 506 zurückverzweigt.

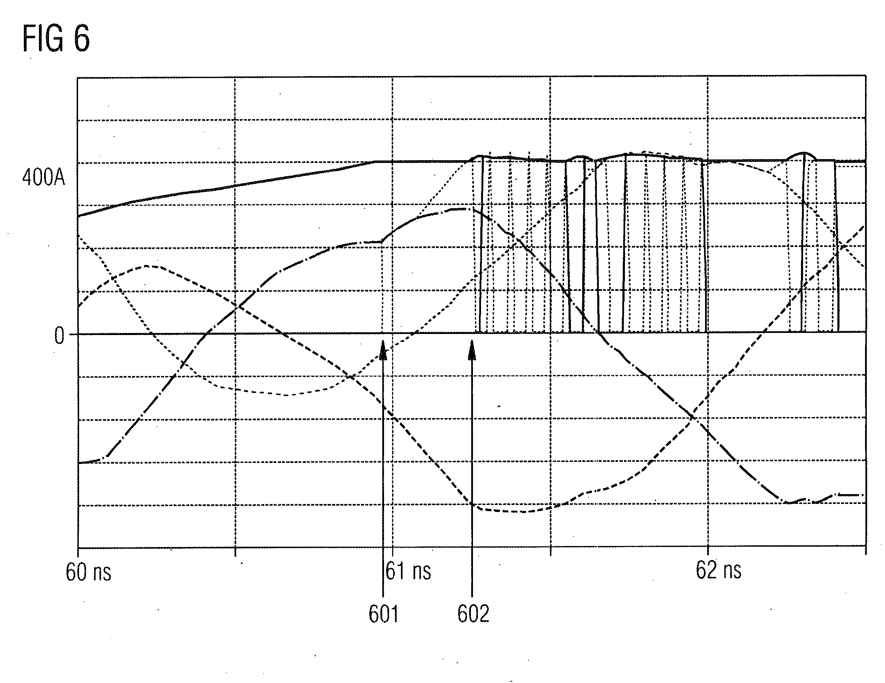

Die Funktionsweise wird in dem Signaldiagramm von Fig.6 verdeutlicht. Zwischen 60ns und 61ns wird das Schutzmodul VPM eingeschaltet (Zeitpunkt 601). Der Strom steigt auf ca. 400A, dann wird das Schutzmodul VPM ausgeschaltet (Zeitpunkt 602). Nun wird der Zwischenkreis aufgeladen. Wird ein Grenzwert für die Spannung am Zwischenkreis erreicht, baut der Bremschopper die Spannung am Zwischenkreis ab. Wird die Phasenspannung bzw. der Phasenstrom wieder zu hoch (d.h. bei Erreichen bzw. Überschreiten des hierfür vorgegebenen Schwellwerts), schaltet das Schutzmodul VPM erneut ein.

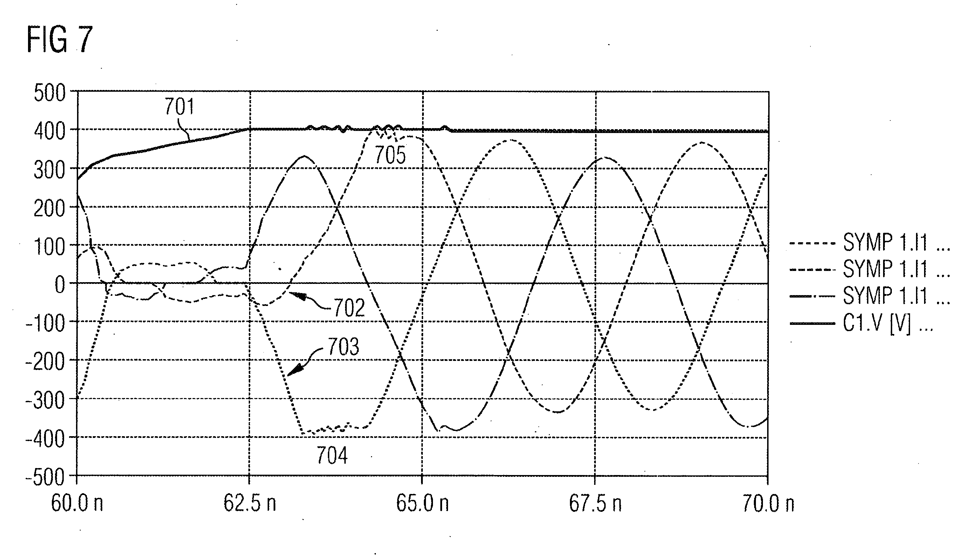

In Fig.7 ist gezeigt, dass sowohl die Motorströme als auch die Zwischenkreisspannung auf vorgewählte Werte begrenzt werden können. So zeigt der Kurvenverlauf 701 eine Begrenzung der Zwischenkreisspannung entsprechend der Darstellung von Fig.6. Die beiden Kurvenverläufe 702 und 703 zeigen Phasenströme, die an den Stellen 704 und 705 begrenzt werden.

## Patentansprüche

1. Ansteuersystem für einen permanent .erregten Elektromotor (26) mit mindestens einem Strang (20, 22, 24; A, B, C), umfassend :
- eine erste Halbbrückenanordnung (14, 16, 18) für jeden Strang (20, 22, 24; A, B, C) des Elektromotors (26);
- einen Zwischenkreis (28), der die Halbbrückenanordnung (14, 16, 18) mit einer Motorversorgungsspannungsquelle (E1) verbindet;
- eine Motorsteuerrung (34) zur Ansteuerung der Halbbrückenanordnung (14, 16, 18), wobei anhand der Motorsteuerung (34) an den jeweiliegen der Halbbrückenanordnung (14, 16, 18) zugeordneten Strang (20, 22, 24; A, B, C) des Elektromotors (26) ein Potential vorgegebener Polarität für eine vorgegebene Zeitdauer anlegbar ist;
- ein Schutzmodul (VPM), das mit dem mindestens einen Strang (A, B, C) des Elektromotors (26) verbunden ist, umfassend einen ersten Schalter (301, S2) anhand dessen der mindestens eine Strang (20, 22, 24; A, B, C) des Elektromotors (26) kurzschließbar ist,
- **dadurch gekennzeichnet, dass** der Zwischenkreis (28) einen Bremschopper (S1, R1) umfasst und
- wobei beim Überschreiten eines vorgegebenen ersten mindestens einen Phasenstrom der erste Schalter (301; S2) abschaltbar ist.

2. Ansteuersystem nach Anspruch 1, bei dem in einem Fehlerfall der erste Schalter (301) einschaltbar ist.

3. Ansteuersystem nach Anspruch 1 oder 2, bei dem beim Überschreiten eines vorgegebenen zweiten Schwellwerts einer Spannung an dem Zwischenkreis diese Spannung über den Bremschopper reduzierbar ist.

4. Ansteuersystem nach einem der vorangehenden Ansprüche, bei dem eine Messeinheit (46) vorgesehen ist, anhand derer die aktuellen Messwerte zur Bestimmung eines Erreichens des ersten und/oder des zweiten Schwellwerts bestimmbar sind.

5. Ansteuersystem nach Anspruch 4, bei dem anhand der Messeinheit (46) ein Fehlerfall detektierbar ist.

6. Ansteuersystem nach einem der vorhergehenden Ansprüche, bei dem der Bremschopper einen zweiten Schalter (S1) und einen Verbraucher (R1) umfasst.

7. Ansteuersystem nach einem der vorhergehenden Ansprüche, bei dem der erste und/oder der zweite Schalter ein elektronischer Schalter ist und mindestens eines der folgenden Bauelemente umfasst:
- einen Halbleiterschalter;
- einen Thyristor;
- einen IGBT;
- einen Transistor.

8. Ansteuersystem nach einem der vorhergehenden Ansprüche, bei dem der erste Schalter (301) parallel zu einer zweiten Halbbrückenanordnung (D31, D34; D32, D35; D33, D36) ausgeführt ist.

9. Ansteuersystem nach einem der vorhergehenden Ansprüche, bei dem der Fehlerfall mindestens einen der folgenden Fälle umfasst:
- Ein Abfall oder ein Ausfall der Motorversorgungsspannung;
- einen Kurzschlussfehler, insbesondere im Bereich des Motors;
- ein Ansteigen einer Spannung an dem Zwischenkreis oberhalb eines vorgegebenen Grenzwerts;
- Fehler im Bereich der ersten oder zweiten Halbbrückenanordnung.

10. Verfahren zur Ansteuerung des Ansteuersystems nach einem der vorhergehenden Ansprüche, umfassend die folgenden Schritte:
- in einem Fehlerfall wird das Schutzmodul (VPM) anhand des ersten Schalters (301, S2) zugeschaltet;
- ein Phasenstrom in dem mindestens einen Strang (A, B, C) wird gemessen;
- überschreitet der Phasenstrom den vorgegebenen ersten Schwellwert, so wird der erste Schalter (301, S2) abgeschaltet;
- erreicht die Spannung am Zwischenkreis (28) einem zweiten Schwellwert, so wird diese Spannung mittels des Bremschoppers (S1, R1) vermindert.

## Claims

1. Drive system for a permanent-magnet electric motor (26) having at least one winding section (20, 22, 24; A, B, C), comprising:
- a first half-bridge arrangement (14, 16, 18) for each winding section (20, 22, 24; A, B, C) of the electric motor (26);
- an intermediate circuit (28), which connects the half-bridge arrangement (14, 16, 18) to a motor supply voltage source (E1) ;
- a motor controller (34) for driving the half-bridge arrangement (14, 16, 18) wherein a potential of predetermined polarity can be applied for a predetermined time period via the motor controller (34) to that respective winding section (20, 22, 24; A, B, C) of the electric motor (26) which is associated with the half-bridge arrangement (14, 16, 18);
- a protection model (VPM), which is connected to the at least one winding section (A, B, C) of the electric motor (26), comprising a first switch (301, S2) which can be used to short the at least one winding section (20, 22, 24; A, B, C) of the electric motor (26),
- **characterized in that** the intermediate circuit (28) comprises a braking chopper (S1, R1) and
- wherein the first switch (301; S2) can be turned off when a predetermined first threshold value is exceeded for at least one phase current.

2. Drive system according to Claim 1, in which the first switch (301) can be switched on in the event of a fault.

3. Drive system according to Claim 1 or 2, in which, when a voltage on the intermediate circuit exceeds a predetermined second threshold value, this voltage can be reduced via the braking chopper.

4. Drive system according to one of the preceding claims, in which a measurement unit (46) is provided, on the basis of which the instantaneous measured valves can be determined in order to determine whether the first and/or the second threshold value has been reached.

5. Drive system according to Claim 4, in which the measurement unit (46) can detect a fault situation.

6. Drive system according to one of the preceding claims, in which the braking chopper comprises a second switch (S1) and a load (R2).

7. Drive system according to one of the preceding claims, in which the first and/or the second switch is an electronic switch and comprises at least one of the following components:
- a semiconductor switch;
- a thyristor;
- an IGBT;
- a transistor.

8. Drive system according to one of the preceding claims, in which the first switch (301) is connected in parallel with a second half-bridge arrangement (D31, D34; D32, D35; D33, D36) .

9. Drive system according to one of the preceding claims, in which the fault situation comprises at least one of the following faults:
- a drop or a failure of the motor supply voltage;
- a short-circuit fault, in particular in the area of the motor;
- a rise in the voltage on the intermediate circuit above a predetermined limit value;
- a fault in the area of the first or second half-bridge arrangement.

10. Method for driving the drive system according to one of the preceding claims, comprising the following steps:
- in the event of a fault, the protection module (VPM) is connected by the first switch (301, S2);
- a phase current in the at least one winding section (A, B, C) is measured;
- if the phase current exceeds the predetermined first threshold value, then the first switch (301, S2) is turned off;
- if the voltage on the intermediate circuit (28) reaches a second threshold valve, then this voltage is reduced by means of the braking chopper (S1, R1).

## Revendications

1. Système de commande pour un moteur ( 26 ) électrique à excitation permanente ayant au moins une branche ( 20, 22, 24 ; A, B, C ), comprenant :
- un premier montage ( 14, 16, 18 ) en demi-pont pour chaque branche ( 20, 22, 24 ; A, B, C ) du moteur ( 26 ) électrique ;
- un circuit ( 28 ) intermédiaire, qui relie le montage ( 14, 16, 18 ) en demi-pont à une source ( 1 ) de tension d'alimentation du moteur ;
- une commande ( 34 ) de moteur pour commander le montage ( 14, 16, 18 ) en demi-pont, un potentiel de polarité prescrite pouvant être appliqué pendant une durée prescrite à la branche ( 20, 22, 24 ; A, B, C ) respective affectée au montage ( 14, 16, 18 ) en demi-pont au moyen de la commande ( 34 ) de moteur ;
- un module ( VPM ) de protection, qui est relié à la au moins une branche ( A, B, C ) du moteur ( 26 ) électrique, comprenant un premier commutateur ( 301 ; S2 ) au moyen duquel la au moins une branche ( 20, 22, 24 ; A, B, C ) du moteur ( 26 ) électrique peut être court-circuitée,
- **caractérisé en ce que** le circuit ( 28 ) intermédiaire comprend un hacheur ( S1, R1 ) de freinage et
- dans lequel, si une première valeur de seuil prescrite d'au moins un courant de phase est dépassée, le premier commutateur ( 301 ; S2 ) peut être ouvert.

2. Système de commande suivant la revendication 1, dans lequel dans le cas d'un défaut, le premier commutateur ( 301 ) peut être fermé.

3. Système de commande suivant la revendication 1 ou 2, dans lequel, si une deuxième valeur de seuil prescrite d'une tension appliquée au circuit intermédiaire est dépassée, cette tension peut être réduite par le hacheur de freinage.

4. Système de commande suivant l'une des revendications précédentes, dans lequel il est prévu une unité ( 46 ) de mesure, au moyen de laquelle les valeurs de mesure instantannées peuvent être déterminées pour la détermination du fait que la première et/ou la deuxième valeur de seuil est atteinte.

5. Système de commande suivant la revendication 4, dans lequel un cas de défaut peut être détecté au moyen de l'unité ( 46 ) de mesure.

6. Système de commande suivant l'une des revendications précédentes, dans lequel le hacheur de freinage comprend un deuxième commutateur ( S1 ) et un utilisateur ( R1 ).

7. Système de commande suivant l'une des revendications précédentes, dans lequel le premier ou/le deuxième commutateur est un commutateur électronique et comprend au moins l'un des composants suivantes :
- un commutateur à semiconducteur;
- un thyristor;
- un IGBT;
- un transistor.

8. Système de commande suivant l'une des revendications précédentes, dans lequel le premier commutateur ( 301 ) est réalisé en parallèle à un deuxième montage ( D31; D34 ; D32, D35 ; D33, D36 ) en demi-pont.

9. Système de commande suivant l'une des revendications précédentes, dans lequel le cas de défaut comprend au moins l'un des défauts suivantes :
- une chute ou un arrêt de la tension d'alimentation du moteur ;
- un défaut de court-circuit, notamment dans la zone du moteur ;
- une élévation d'une tension sur le circuit intermédiaire au-dessus d'une valeur limite prescrite ;
- un défaut dans la zone du premier ou du deuxième montage en demi-pont.

10. Procédé de commande du système de commande suivant l'une des revendications précédentes, comprenant les stades suivantes :
- dans un cas de défaut, on branche le module ( VPM ) de protection au moyen du premier commutateur ( 301 ; S2 ) ;
- on mesure un courant de phase dans la au moins une branche ( A, B, C ) ;
- si le courant de phase dépasse la première valeur de seuil prescrite, on ouvre le premier commutateur ( 301 . S2 ) ;
- si la tension sur le circuit ( 28 ) intermédiaire atteint une deuxième valeur de seuil, on abaisse cette tension au moyen du hacheur ( S1, R1 ) de freinage.
